**Europäisches Patentamt**

**European Patent Office**

**Office européen des brevets**

(19)

(11) Veröffentlichungsnummer: **0 070 457**
**B1**

(12) ## EUROPÄISCHE PATENTSCHRIFT

(45) Veröffentlichungstag der Patentschrift:
13.02.85

(51) Int. Cl.⁴: **F 02 B 37/00**

(21) Anmeldenummer: **82106068.8**

(22) Anmeldetag: **07.07.82**

(54) **Anordnung einer Abgasrückführvorrichtung für eine Brennkraftmaschine mit einem Abgasturbolader.**

(30) Priorität: 16.07.81 **DE 3128040**

(43) Veröffentlichungstag der Anmeldung:
**26.01.83 Patentblatt 83/4**

(45) Bekanntmachung des Hinweises auf die Patenterteilung:
**13.02.85 Patentblatt 85/7**

(84) Benannte Vertragsstaaten:
**DE FR GB IT SE**

(56) Entgegenhaltungen:
**DE - B - 1 237 835**
**FR - A - 2 322 264**
**FR - A - 2 446 395**

(73) Patentinhaber: **BAYERISCHE MOTOREN WERKE
Aktiengesellschaft, Postfach 40 02 40 Petuelring 130,
D-8000 München 40 (DE)**

(72) Erfinder: **Melzer, Hans-Harald, Dr.-Ing.,
Galgenbachweg 15, D-8056 Neufahrn (DE)**
Erfinder: **Spindelböck, Wolf-Dieter, Reichenberger
Strasse 3, D-8068 Pfaffenhofen (DE)**

(74) Vertreter: **Schwelger, Erwin, Bayerische Motoren Werke
Aktiengesellschaft Postfach 40 02 40 Petuelring 130 -
AJ-20, D-8000 München 40 (DE)**

**Beschreibung**

Die Erfindung geht im Oberbegriff des Hauptanspruches von der FR-A-2 322 264 aus. Bei dieser bekannten Bauart wird die Verbindungsleitung einer Abgasrückführvorrichtung an das Verdichtergehäuse im Bereich eines Diffusors oder des Spiralkanals angeschlossen. Diese Anschlußart ist durch den im Gußgehäuse integrierten Rückführkanal baulich aufwendig, sie kompliziert die Gestaltung des Spiralgehäuses für den Verdichter.

Weiter ist es bekannt, bei mehrzylindrischen Reihen-Brennkraftmaschinen den Abgasturbolader am Abgassammler strömungsmäßig mittig anzuschließen. Daraus ergeben sich im Abgassammler einander entgegengerichtete Abgasströme, die zur Vermeidung einer nachteiligen gegenseitigen Beeinflussung im Abgassammler jeweils gesondert bis zum Heißgaseinlaß der Turbine des Abgasturboladers geführt sind. Ist an einen derartigen Abgassammler eine Abgasrückführvorrichtung anzuschließen, so muß diese Vorrichtung zur Erzielung einer einwandfreien Abgasrückführung mit jedem einzelnen Gasführungskanal dieses Abgassammlers in Verbindung stehen. Dies erfordert die Ausbildung von zusätzlichen, gesondert voneinander angeordneten Verbindungskanälen im Abgassammler, wodurch dieser im Aufbau aufwendig und somit in der Herstellung teuer wird.

Dieser aufwendige Abgassammler kann durch einen Abgasturbolader gemäß der FR-A-2 446 395 vermieden werden. Dieser Abgasturbolader weist einen mit dem Einlaßkanal des Turbinen-Spiralgehäuses gasführend in Verbindung stehenden Ringkanal auf, aus dem Abgas über eine Verbindungsleitung der vom Verdichtergehäuse abgehenden Ladeluftleitung zugeführt wird. Mit dieser Anordnung einer Abgasrückführvorrichtung ist eine relativ aufwendige Gestaltung des Turbinengehäuses verbunden mit der Folge einer relativ teuren Herstellung.

Weiter ist bei den bekannten Abgasrückführvorrichtungen an Brennkraftmaschinen mit nach dem Querstromprinzip ausgebildeten Zylinderköpfen eine relativ lange und durch zusätzliche Halterung gewichtige Verbindungsleitung zwischen der Abgasführung auf der einen Zylinderkopfseite und der Ansaugluftführung auf der anderen Zylinderkopfseite verwendet. Dabei ist die Verbindungsleitung häufig über den Deckel des Steuerwellenraumes bzw. des Zylinderkopfes der Brennkraftmaschine hinweg zum Luftsammler geführt. Neben dem erhöhten Montageaufwand für die Verbindungsleitung ergibt sich als weiterer Nachteil, daß die vorgenannten Teile der Brennkraftmaschine bei einer Wartung nicht ohne Demontage der Abgasrückführvorrichtung bzw. der Verbindungsleitung zugänglich sind.

Der Erfindung liegt die Aufgabe zugrunde, eine im Aufbau einfachere und im Gewicht leichtere Anordnung einer Abgasrückführvorrichtung für eine Brennkraftmaschine mit Abgasturbolader zu schaffen.

Diese Aufgabe wird mit den kennzeichnenden Merkmalen des Hauptanspruches gelöst. Mit der erfindungsgemäß am Abgasturbolader integrierten Abgasrückführvorrichtung sind in vorteilhafter Weise relativ lange und damit gewichtige Abgasrückführleitungen einschließlich zusätzlicher Halterungen vermieden. Durch den Fortfall der langen Abgasrückführleitung ist der Zugang zu Baugruppen der Brennkraftmaschine wesentlich verbessert. Die integrierte Anordnung ergibt auch eine bessere Zugänglichkeit der gesamten Abgasrückführvorrichtung und erleichtert damit auch die Wartung bei im Kraftfahrzeug eingebauter Brennkraftmaschine. Weiter ist mit der Erfindung in vorteilhafter Weise eine aus Abgasturbolader und kompletter Abgasrückführvorrichtung gebildete Montageeinheit geschaffen. Schließlich ist mit der integrierten Anordnung auch ein längerer Mischungsweg von Ladeluft und rückgeführtem Abgas erzielt. Mit dem Anschluß der Verbindungsleitung an einer einem integrierten Abgas-Bypassventil zugeordneten Staukammer im Heißgas-Einlaßkanal der Turbine ist eine einwandfreie Abgasrückführung bei niederer Last und Drehzahl erreicht.

Vorteilhafte Ausgestaltungen sind in den Unteransprüchen angegeben. Mit den Merkmalen des Anspruches 2 ist einerseits eine Quereinströmung des rückgeführten Abgases mit Staueffekt der Ladeluft im Auslaßkanal des Verdichters vermieden und andererseits eine gute Durchmischung von Abgas und Ladeluft ohne besondere Störung der Ladeluft erzielt. Mit dem im Anspruch 3 beschriebenen Balgenrohr werden in der Verbindungsleitung durch Bauteiltoleranzen und Temperaturunterschiede bedingte Abweichungen vorteilhaft kompensiert.

Anhand eines in der Zeichnung dargestellten Ausführungsbeispiels ist die Erfindung beschrieben.

Die Zeichnung zeigt in

Fig. 1 in Draufsicht eine Anordnung der Abgasrückführvorrichtung an einem Abgasturbolader,

Fig. 2 eine Seitenansicht der Anordnung nach Fig. 1.

Ein Abgasturbolader 1 einer nicht aufgezeigten Brennkraftmaschine umfaßt ein Turbinengehäuse 2, an dem ein Verdichtergehäuse 3 über ein Lagergehäuse 4 angeflanscht ist. Am Abgasturbolader 1 integriert ist eine Abgasrückführvorrichtung 5 für die Brennkraftmaschine. Die Abgasrückführvorrichtung 5 umfaßt eine aus den Abschnitten 6 und 7 bestehende Verbindungsleitung 8 sowie ein zwischengeschaltetes Steuerventil 9. Die Abgasrückführvorrichtung 5 ist zwischen dem Heißgaseinlaß 10 des Turbinengehäuses 2 und dem Ladeluftauslaß 11 des Verdichtergehäuses 3 angeordnet.

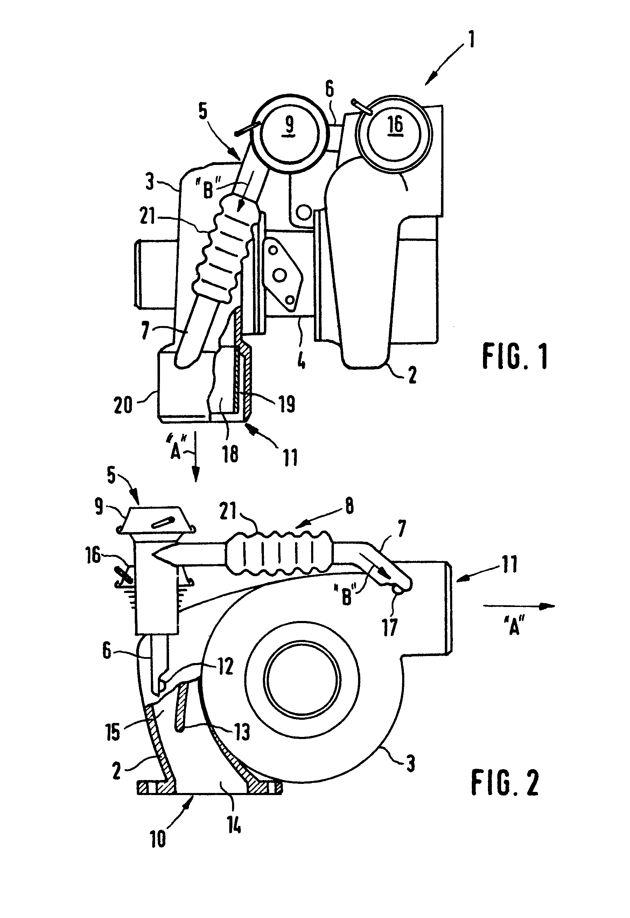

Wie aus Fig. 2 hervorgeht, steht der Leitungsabschnitt 6 der Abgasrückführvorrichtung 5 durch eine Überströmöffnung 12 in der Wand des Turbinengehäuses 2 mit einer durch eine Trennwand 13 im Heißgas-Einlaßkanal 14 gebildeten Staukammer 15 in Verbindung. Die Staukammer 15 ist ferner mit einer durch ein am Turbinengehäuse 2 angeordnetes Abgas-Bypassventil 16 gesteuerten Bypassleitung (nicht gezeigt) verbunden. Weiter steht die Abgasrückführvorrichtung 5 über den Leitungsabschnitt 7 durch eine Überströmöffnung 17 in der Wand des Verdichtergehäuses 3 mit einer im Verdichter-Auslaßkanal 18 angeordneten Ringkammer 19 in Verbindung. Ferner ist der verdichterseitige Leitungsabschnitt 7 zur Ringkammer 19 tangential und in Ausströmrichtung (Pfeil »A«) der verdichteten Ladeluft geneigt am Anschlußstutzen 20 des Verdichtergehäuses 3 angeordnet. Damit ist eine schraubengangartige Einströmung des rückgeführten Abgases (Pfeil »B«) in die Ladeluft für eine gute Durchmischung erzielt.

Durch ein Balgenrohr 21 im Leitungsabschnitt 7 sind durch Bauteiltoleranzen und Temperaturunterschiede bedingte Abweichungen kompensiert. Weiter ist das Steuerventil 9 über den Leitungsabschnitt 6 am Turbinengehäuse 2 angeordnet. Durch diesen heißgasseitigen Anbau des Steuerventils 9 ist die Selbstreinigung des Ventils gewährleistet und das Gewicht des Steuerventils 9 von dem an einem Abgassammler der Brennkraftmaschine angeflanschten Turbinengehäuse 2 aufgenommen.

**Patentansprüche**

1. Anordnung einer Abgasrückführvorrichtung für eine Brennkraftmaschine mit einem aus einer Abgasturbine und einem Ladeluft-Verdichter bestehenden Abgasturbolader,

— wobei die Abgasrückführvorrichtung (5) eine aus Abschnitten (6 und 7) bestehende Verbindungsleitung (8) mit einem zwischengeschalteten Steuerventil (9) umfaßt,
— die zwischen der Abgasführung im Bereich des Heißgas-Einlasses (10) des Turbinengehäuses (2) und der Ladeluftführung des Verdichtergehäuses (3) angeordnet ist,

dadurch gekennzeichnet,

— daß die Verbindungsleitung (8) einerseits durch eine Überströmöffnung (12) in der Wand des Heißgas-Einlasses (10) des Turbinengehäuses (2) mit einer durch eine Trennwand (13) im Heißgas-Einlaßkanal (14) gebildeten Staukammer (15) und
— andererseits mit einer Überströmöffnung (17) in der Wand des Auslaßkanals (18) des Verdichtergehäuses (3) in Verbindung steht.

2. Anordnung nach Anspruch 1, dadurch gekennzeichnet,

— daß die Verbindungsleitung (8) verdichterseitig mittels der Überströmöffnung (17) mit einer im Verdichter-Auslaßkanal (18) angeordneten Ringkammer (19) in Verbindung steht und
— der verdichterseitige Abschnitt (7) der Verbindungsleitung (8) zur Ringkammer (19) tangential und in Ausströmrichtung (Pfeil »A«) der verdichteten Ladeluft gerichtet an einem Anschlußstutzen (20) des Verdichtergehäuses (3) angeordnet ist.

3. Anordnung nach den Ansprüchen 1 und 2, dadurch gekennzeichnet, daß in der Verbindungsleitung (8) ein Balgenrohr (21) angeordnet ist.

**Claims**

1. An arrangement of an exhaust gas recycling device for an internal combustion engine with an exhaust-gas driven turbo-charger comprising an exhaust-gas driven turbine and a charging-air compressor,

— wherein the exhaust-gas recycling device (5) comprises a connecting passage (8) formed of sections (6 and 7) with a control valve (9) fitted between said sections,
— which connecting passage is arranged between the exhaust system and the charging-air system of the compressor housing (3) in the zone of the hot-gas intake (10) of the turbine housing (2),

characterized in

— that the connecting passage (8) communicates, on the one hand, through an oberflow opening (12) in the wall of the hot-gas intake (10) of the turbine housing (2) with a baffle chamber (15) formed by a partition (13) in the hot-gas intake duct (14), and
— on the other hand, with an oberflow opening (17) in the wall of the outlet duct (18) of the compressor housing (13).

2. An arrangement according to Claim 1, characterized in

— that the connecting passage (8) communicates at the cmpressor side and by means of the overflow opening (17) with an annular chamber (18) arranged in the compressor outlet duct (18), and
— the compressor-side section (7) of the connecting passage (8) is arranged tangentially to the annular chamber (19) and, in the outflow direction (arrow »A«) of the compressed air charge, on a port (20) of the compressor housing (3).

3. An arrangement according to Claim 1 and 2, characterized in that a tubular bellows (21) is arranged in the connecting passage (8).

## Revendications

1. Arrangement d'un dispositif de recirculation des gaz d'échappement pour un moteur à combustion interne avec un turbo-compresseur alimenté par les gaz d'échappement et constitué d'une turbine alimentée par les gaz d'échappement et d'un compresseur d'air d'alimentation, dans lequel:

— le dispositif de recyclage des gaz d'échappement (5) comporte une canalisation de liaison (8) constituée des parties (6 et 7) avec interposition d'une soupape de commande (9),
— cette soupape est disposée entre le passage des gaz d'échappement au voisinage de l'admission des gaz chauds (10) du carter (2) de la turbine et le passage d'air d'alimentation du carter (3) du compresseur,

arrangement caractérisé en ce que:

— la canalisation de liaison (8) est en communication, d'une part, par un orifice de trop-plein (12) dans la paroi de l'admission de gaz chauds (10) du carter (2) de la turbine, avec une chambre d'accumulation (5) ménagée dans le canal d'admission (14) des gaz chauds par une paroi de séparation (13),
— et est, d'autre part, en communication avec un orifice de trop-plein (17) dans la paroi du canal de sortie (18) du carter (3) du compresseur.

2. Arrangement selon la revendication 1, caractérisé en ce que:

— la canalisation de liaison (8) est en communication côté compresseur au moyen de l'orifice de trop-plein (17) avec une chambre annulaire (19) disposée dans le canal de sortie (18) du compresseur,
— la partie (7) côté compresseur de la canalisation de liaison (8) est disposée sur une tubulure de raccordement (20) du carter (3) du compresseur, en étant orientée tangentiellement par rapport à la chambre annulaire (19) et dans la direction de sortie (flèche »A«) de l'air comprimé d'alimentation.

3. Arrangement selon les revendications 1 et 2, caractérisé en ce qu'un tube à soufflet (21) est disposé sur la canalisation de liaison (8).

FIG. 1

FIG. 2